# EUROPEAN PATENT APPLICATION

(11) **EP 4 557 676 A1**
(43) Date of publication of application: **21.05.2025**
(21) Application number: 24194437.0
(22) Date of filing: 14.08.2024
(51) Int. Cl.: H04L 12/40

(54) **BATTERY MANAGEMENT APPARATUS AND METHOD OF SETTING CAN BAUD RATE**

(30) Priority: 20.11.2023 KR 20230159970
(71) Applicant: SAMSUNG SDI CO., LTD., Giheung-gu Yongin-si, Gyeonggi-do 17084 (KR)
(72) Inventor: Seo, Young Dong, 16678 Suwon-si, Gyeonggi-do (KR)
(74) Representative: Gulde & Partner

(57) **Abstract**

The present disclosure relates to a battery management apparatus (120) and a method of setting a controller area network, CAN, baud rate, and the technical problem to be solved provides a battery management apparatus (120) and a method of setting a controller area network, CAN, baud rate that are capable of automatically setting the CAN baud rate according to an external device when one type of battery pack is used in multiple models of external devices (e.g., laborious extra-orbital vehicle, LEV, x electrical vehicle, xEV, or energy storage system, ESS). To this end, the present disclosure provides a battery management apparatus (120) including an interface unit (126) configured to perform CAN communication with an external device (10) through a CAN bus line and a micro controller unit, MCU, (128) configured to set a CAN baud rate based on whether an error is detected in a CAN message frame received from the external device (10) through the interface unit (126).

## Description

### BACKGROUND

### 1. Field

Aspects of embodiments of the present disclosure relate to a battery management apparatus and a method of setting a controller area network (CAN) baud rate.

### 2. Description of the Related Art

In general, unlike primary batteries that cannot be recharged, secondary batteries are batteries that can be repeatedly charged and discharged. Low-capacity batteries in which one battery cell is packaged in the form of a pack have been utilized in small electronic devices such as mobile phones and camcorders, and large-capacity batteries in which dozens of battery cells are connected have been utilized as a power supply for driving motors such as electric bicycles, electric scooters, hybrid vehicles, and electric vehicles.

When the secondary battery is utilized in an external device (e.g., laborious extra-orbital vehicle (LEV), x electrical vehicle (xEV), or energy storage system (ESS)), the secondary battery and the external device transmit and receive data utilizing controller area network (CAN) communication.

In the case where one type of secondary battery is utilized in multiple models of external devices (e.g., LEV, xEV, or ESS), when CAN baud rates of each external device are different, in order to make the baud rate of the secondary battery compatible, there is a method of individually setting a baud rate through external communication or provide pre-arranged baud rate information to a battery management system (BMS) utilizing an external connector.

However, prior to connecting a CAN communication line of the BMS to a CAN bus of an external device, the method of individually setting a baud rate through communication outside a battery pack has a problem in that a separate setting device (e.g., a device transmitting personal computer (PC) and a graphical user interface (GUI) program or separate communication data) is required and incorrect setting may be applied due to operator error.

In addition, the method of receiving a signal from an external connector connected to a battery pack in a BMS and operating at a pre-arranged baud rate has a problem in that separate hardware for receiving an external signal is required and incorrect setting can be performed due to operator error.

The above-described information disclosed in the background section of the present disclosure is only for improving understanding of the background of the present invention, and therefore may include information that does not constitute the related art.

### SUMMARY

The present invention is directed to providing a battery management apparatus and a method of setting a controller area network (CAN) baud rate that are capable of automatically setting the CAN baud rate according to an external device when one type of battery pack is used in multiple models of external devices (e.g., laborious extra-orbital vehicle (LEV), x electrical vehicle (xEV), or energy storage system (ESS)).

However, the technical problem to be solved by the present invention is not limited to the above-described problem, and other problems not described can be clearly understood by those skilled in the art from the description of the invention described below.

According to an embodiment of the present invention for solving the above technical problem, a battery management apparatus automatically sets a CAN baud rate based on whether an error is detected in a CAN message frame received from an external device through the CAN bus line.

According to an aspect of the present invention, a battery management apparatus comprises: an interface unit configured to perform controller area network (CAN) communication with an external device through a CAN bus line; and a micro controller unit (MCU) configured to set a CAN baud rate based on whether an error is detected in a CAN message frame received from the external device through the interface unit.

According to an aspect of the present invention, when the battery management apparatus wakes up, the MCU may initialize the CAN baud rate to a most recently used CAN baud rate, it may check whether the error in the CAN message frame received from the external device is detected at the initialized CAN baud rate and it may set the initialized CAN baud rate as a final CAN baud rate, when no error is detected.

When the error is detected in the CAN message frame, the MCU may count the number of detected errors, and when the counted number of errors is greater than or equal to a preset threshold value, the MCU may change the initialized CAN baud rate to a different CAN baud rate, it may check whether the error is detected in the CAN message frame received from the external device 10 at the changed CAN baud rate and it may set the changed CAN baud rate as the final CAN baud rate when no error is detected.

According to an aspect of the present invention, when a CAN reception pin (CAN RX pin) is set to an external interrupt mode, the MCU may calculate interrupt occurrence time intervals whenever an interrupt occurs, it may calculate the baud rate based on the interrupt occurrence time intervals for a preset certain period of time, it may acquire the baud rate most similar to the calculated baud rate from a baud rate table, it may initialize the baud rate to the CAN baud rate, and checks whether an error is detected in the CAN message frame received from the external device at the initialized CAN baud rate and it may set the initialized CAN baud rate as a final CAN baud rate when no error is detected.

The MCU may select a minimum time among the interrupt occurrence time intervals for a certain period of time as 1 bit time and it may calculate the baud rate using a reciprocal of the selected minimum time.

When the error is detected in the CAN message frame, the MCU may select a minimum time among the interrupt occurrence time intervals for the preset certain period of time as 1 bit time, it may calculate the baud rate using the selected minimum time, and it may acquire the baud rate most similar to the calculated baud rate from the baud rate table to change the CAN baud rate.

The battery management apparatus may further comprise: a detection unit configured to detect battery status data including at least one of a voltage, a current, and a temperature of a battery module and transmit the detected battery status data to the MCU, wherein the MCU may diagnose whether an abnormality occurs in a battery pack based on the battery status data, and it may turn a switch on when no abnormality occurs in the battery pack to receive the CAN message frame from the external device through the CAN bus line.

When no error is detected in the CAN message frame, the MCU may determine that the CAN baud rate is the same as that of the external device, and, when the error is detected in the CAN message frame, it may be determined that the CAN baud rate is not the same as that of the external device, and the preset CAN baud rate may be changed to a different CAN baud rate.

According to an aspect of the present invention, a method of setting a controller area network (CAN) baud rate comprises: when a battery management apparatus wakes up, initializing, by a micro controller unit (MCU), a CAN baud rate to a most recently used CAN baud rate; diagnosing, by the MCU, whether an abnormality occurs in a battery pack based on battery status data; when no abnormality occurs in the battery pack, turning, by the MCU, a switch on to receive a CAN message frame from an external device through a CAN bus line; and checking, by the MCU, whether an error is detected in the CAN message frame and setting the initialized CAN baud rate as a final CAN baud rate when no error is detected.

Preferably, in the setting of the initialized CAN baud rate as the final CAN baud rate, when the error is detected in the CAN message frame, the MCU may count the number of detected errors, and when the counted number of errors is greater than or equal to a preset threshold value, the MCU may change the initialized CAN baud rate to a different CAN baud rate, it may check whether the error is detected in the CAN message frame received from the external device at the changed CAN baud rate and it may set the changed CAN baud rate as the final CAN baud rate when no error is detected.

Preferably, in the setting of the initialized CAN baud rate as the final CAN baud rate, the MCU may acquire a CAN baud rate different from the initialized CAN baud rate from a baud rate table in which a plurality of different CAN baud rates are set, and change the initialized CAN baud rate to the acquired different CAN baud rate.

According to an aspect of the present invention, a method of setting a controller area network (CAN) baud rate comprises: diagnosing, by a micro controller unit (MCU), whether an abnormality occurs in a battery pack based on battery status data; when no abnormality occurs in the battery pack, turning, by the MCU, a switch on to receive a CAN message frame from an external device through a CAN bus line; calculating, by the MCU, interrupt occurrence time intervals whenever an interrupt occurs according to reception of the CAN message frame; calculating, by the MCU, a baud rate based on the interrupt occurrence time intervals for a preset certain period of time; acquiring, by the MCU, a baud rate most similar to the calculated baud rate from a baud rate table and initializing the acquired baud rate to a CAN baud rate; and checking, by the MCU, whether the error is detected in the CAN message frame received from the external device at the initialized CAN baud rate and setting the initialized CAN baud rate as a final CAN baud rate when no error is detected.

Preferably, in the calculating of the interrupt occurrence time intervals, the MCU may set a CAN reception pin (CAN RX pin) to an external interrupt mode and may calculate the interrupt occurrence time intervals.

Preferably, in the calculating of the baud rate based on the interrupt occurrence time intervals, the MCU may select a minimum time among the interrupt occurrence time intervals for the certain period of time as 1 bit time, and may use a reciprocal of the selected minimum time to calculate the baud rate.

Preferably, in the setting of the initialized CAN baud rate as the final CAN baud rate, when the error is detected in the CAN message frame, the MCU may select a minimum time among the interrupt occurrence time intervals for the preset certain period of time as 1 bit time, may calculate the baud rate using the selected minimum time, and may acquire a baud rate most similar to the calculated baud rate from the baud rate table to change the CAN baud rate.

According to a further aspect of the present invention, a method of setting a controller area network, CAN, baud rate, comprises: receiving a CAN message frame from an external device through a CAN bus line, and setting, by a micro controller unit, MCU, of a battery management apparatus, a CAN baud rate based on whether an error is detected in the CAN message frame.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a block diagram illustrating a system for setting a controller area network (CAN) baud rate of a battery pack according to an embodiment of the present invention;
FIG. 2 is a block diagram illustrating a circuit of a battery pack according to an embodiment of the present invention;
FIG. 3 is a block diagram illustrating a CAN bus line connecting an external device and a battery pack according to an embodiment of the present invention;
FIG. 4 is a block diagram schematically illustrating a configuration of a battery management apparatus according to an embodiment of the present invention;
FIG. 5 is a diagram illustrating an example of a CAN frame;
FIGS. 6A and 6B are diagrams illustrating an example of an interrupt generation time interval according to an embodiment of the present invention;
FIG. 7 is a flow diagram illustrating a method of setting a CAN baud rate according to an embodiment of the present invention; and
FIG. 8 is a flow diagram illustrating a method of setting a CAN baud rate according to another embodiment of the present invention.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

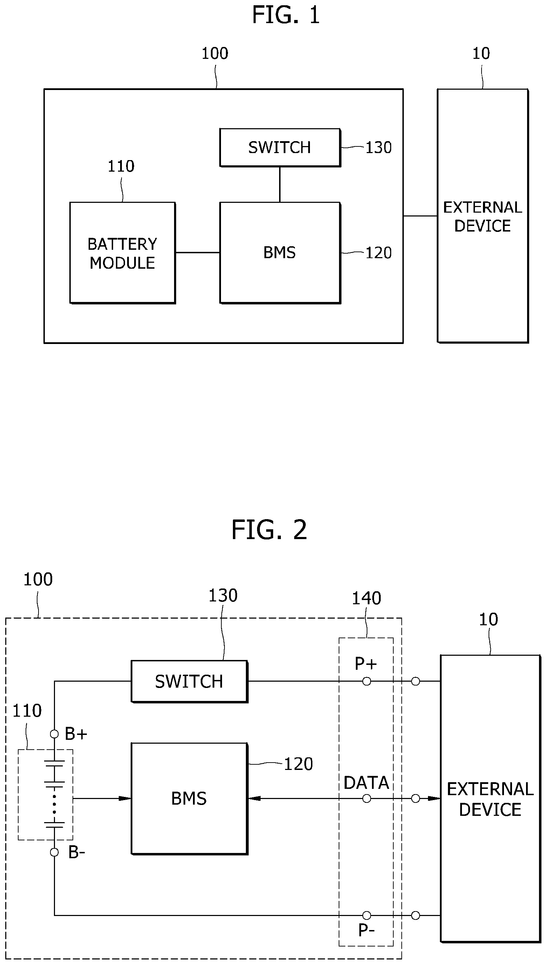

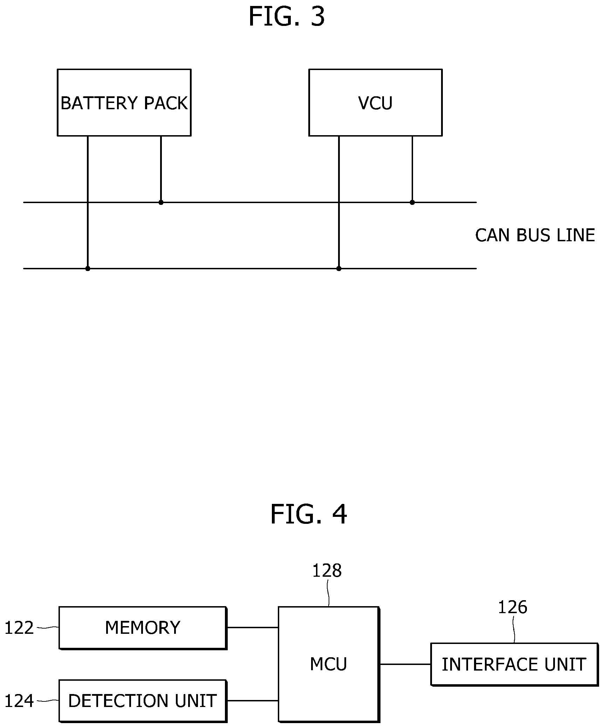

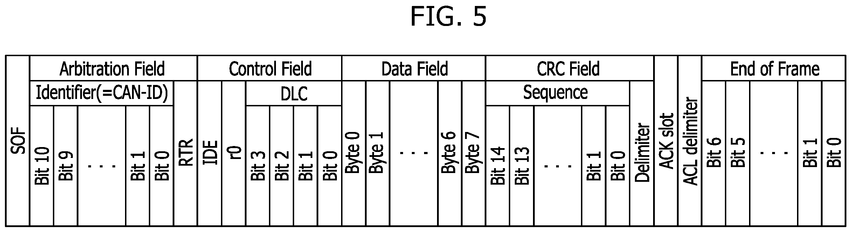

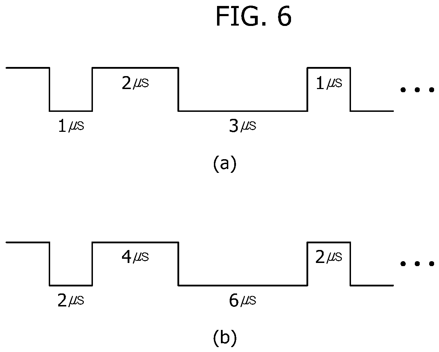

FIG. 1 is a block diagram illustrating a system for setting a controller area network (CAN) baud rate of a battery pack according to an embodiment of the present invention, FIG. 2 is a block diagram illustrating a circuit of a battery pack according to an embodiment of the present invention, FIG. 3 is a block diagram illustrating a CAN bus line connecting an external device and a battery pack according to an embodiment of the present invention, FIG. 4 is block a diagram schematically illustrating a configuration of a battery management apparatus according to an embodiment of the present invention, FIG. 5 is a diagram illustrating an example of a CAN frame, and FIGS. 6A and 6B are diagrams illustrating an example of interrupt generation time intervals according to an embodiment of the present invention.

Referring to FIGS. 1 and 2, a system for setting a baud rate of a battery pack according to an embodiment of the present invention may include an external device 10 and a battery pack 100.

The external device 10 has a structure that may be electrically connected through a positive connection terminal P+ and a negative connection terminal P- of the battery pack 100.

The external device 10 may be a load that receives power from the battery pack 100 or a charging device that supplies power to the battery pack 100 to charge the plurality of battery modules 110.

When the external device 10 is a load, the battery pack 100 may be discharged by operating as a power supply that supplies power to a load. The external device 10 operating as the load may be, for example, an electronic device, a transportation means, or an energy storage system (ESS), and the transportation means may be, for example, an electric vehicle, a hybrid vehicle, or smart mobility.

In addition, the external device 10 may transmit a predetermined communication signal at a predetermined cycle while connected to the battery pack 100. In this case, the external device 10 and the battery pack 100 may transmit and receive a signal (data) through CAN communication. That is, an upper controller (not illustrated) (e.g., a vehicle control unit (VCU), an electronic control unit (ECU), etc.) of the external device 10 (e.g., an electric system, an electric vehicle) and the battery pack 100 may be connected to a CAN bus line to transmit and receive data through the CAN bus line, as illustrated in FIG. 3.

The upper controller of the external device 10 may transmit a CAN message frame to the battery pack 100 through the CAN bus line. In addition, the upper controller of the external device 10 may receive the CAN message frame from the battery pack 100 through the CAN bus line.

The battery pack 100 may be connected to the external device 10 through a connector 140, and a power terminal of the external device 10 may be connected to a first pack terminal P+ and a second pack terminal P- of the connector 140.

The battery pack 100 may include the first pack terminal P+ and the second pack terminal P- corresponding to a plurality of battery cells, and the battery pack 100 may be connected to the external device 10 through the first pack terminal P+ and the second pack terminal P-.

The battery pack 100 is provided to be installed in the external device 10 (e.g., an electric vehicle) and may include at least one battery module 110, a switch 130, and a battery management apparatus (BMS) 120. In various embodiments, the battery pack 100 may further include other components.

The battery module 110 may include a plurality of battery cells and a module housing. The battery module 110 may include a plurality of cells connected in series or parallel, or a combination of the two. The battery modules 110 may be connected in series or parallel, or a combination of the two.

The battery cells may be accommodated inside the module housing in a stacked form. Each battery cell may include a positive lead and a negative lead. Depending on the shape of the battery, round, angular, or pouch type battery cells may be used.

In the battery pack 100, one module may be formed of a single cell stack instead of the battery module 110. The cell stack may be accommodated in an accommodating space of a pack housing or may be accommodated in an accommodating space partitioned by a frame, a partition, etc.

The battery cells generate a large amount of heat during charging/discharging. The generated heat is accumulated in the battery cells and may accelerate the degradation of the battery cell. Accordingly, the battery pack 100 may further include a cooling member to suppress the degradation of the battery cells. The cooling member is provided under the accommodating space where the battery cells are provided, but is not limited thereto and may also be provided at an upper portion or a side surface depending on the battery pack 100.

Exhaust gases inside the battery cells generated in abnormal operating conditions, also known as thermal runaway or thermal event of the battery cell, may be discharged to the outside the battery cells. The battery pack 100 or the battery module 110 may be provided with an exhaust port or the like for discharging the exhaust gases to suppress or reduce damage to the battery pack 100 or the module.

The switch 130 may be connected between the battery module 110 and at least one of the first and second pack terminals P+ and P- to block/allow the electrical connection between the battery module 110 and the external device 10.

The switch 130 may be installed on a current path for charging and discharging the battery module 110.

The switch 130 may control the electrical connection between the battery pack 100 and the external device 10. When the switch 130 is turned on, the battery pack 100 and the external device 10 may be electrically connected to perform the charging or discharging. When the switch 130 is turned off, the battery pack 100 and the external device 10 may be electrically separated from each other. That is, when the switch 130 is turned on, power may be supplied from the battery module 110 to the external device 10 or power may be supplied from the external device 10 to the battery module 110. While the switch 130 is turned off, the charging and discharging of the battery module 110 may be stopped. In this case, the switch 130 may be selectively turned on or turned off under the control of the battery management apparatus 120.

This switch 130 may be implemented as a mechanical relay (e.g., a contactor) that is turned on/off by a magnetic force of a coil, a semiconductor switch such as metal oxide semiconductor field effect transistor (MOSFET), or the like.

The battery management apparatus 120 may diagnose whether an abnormality has occurred in the battery pack 100 based on battery status data indicating the state of the battery module 110, turn the switch 130 on when no abnormality has occurred in the battery pack 100 to receive the CAN message frame received from the external device 10 through the CAN bus line, and set a CAN baud rate based on whether an error is detected in the received CAN message frame. In this case, when no error is detected in the CAN message frame, the battery management apparatus 120 may determine that the CAN baud rate is the same as that of the external device 10. When an error is detected in the CAN message frame, the battery management apparatus 120 may determine that the CAN baud rate is not the same as that of the external device 10, and may change the preset CAN baud rate to a different CAN baud rate.

The battery management apparatus 120 may include a memory 122, a detection unit 124, an interface unit 126, and a micro controller unit (MCU) 128.

The memory 122 is a component that stores data related to the operation of the battery management apparatus 120. In particular, the memory 122 may store a program (application or applet) that can set the CAN baud rate based on whether an error is detected in the CAN message frame received from the external device 10, and the stored information can be selected by the processor as needed. For example, the memory 122 stores various types of data generated during the execution of the operating system or program (e.g., application or applet) for driving the battery management apparatus 120. In addition, the settable CAN baud rate may be stored in the memory 122. Here, the settable CAN baud rate may include all baud rates of the available external devices 10, or include all generally set CAN baud rates. For example, the settable CAN baud rate may include 100 kbps, 125 kbps, 250 kbps, 500 kbps, 1 Mbps, etc. Accordingly, a baud rate table in which a plurality of different CAN baud rates are set may be stored in the memory 122.

The memory 122 generally refers to a non-volatile storage device that continues to maintain the stored information even when power is not supplied, and a volatile storage device that requires power to maintain the stored information. In addition, the memory 122 may perform a function of temporarily or permanently storing data processed by the processor. Here, the memory 122 may include magnetic storage media or flash storage media in addition to the volatile storage device that require power to maintain the stored information, but the scope of the present invention is not limited thereto.

The detection unit 124 may detect the state (voltage, current, temperature, etc.) of the battery module 110 and detect the battery status data indicating the state of the battery. The detection unit 124 may detect a voltage of each cell constituting the battery or each battery module 110. The detection unit 124 may detect a current flowing through the battery module 110 or each battery module 110 constituting the battery pack 100. The detection unit 124 may also detect ambient temperature of at least one point of the battery.

The detection unit 124 may include a voltage sensor, a current sensor, a temperature sensor, etc.

The detection unit 124 may be configured to periodically output the battery status data indicating the voltage, current, ambient temperature, etc., of the battery module 110 detected for every certain cycle (e.g., unit time) to the MCU 128.

The interface unit 126 may perform CAN communication with the external device 10 through the CAN bus line.

The interface unit 126 may enable the CAN communication between the MCU 128 and the upper controller (not illustrated) (e.g., VCU and ECU) of the external device 10 (e.g., electrical system or electric vehicle).

When the external device 10 is connected to the connector 140 of the battery pack 100, the interface unit 126 may enable the CAN communication between the battery management apparatus 120 and the external device 10. In this case, the external device 10 and the battery pack 100 may be connected to the CAN bus line and transmit and receive data through the CAN bus line.

Accordingly, the interface unit 126 may transmit or receive the CAN message frame through the CAN bus line. That is, the interface unit 126 may transmit the CAN message frame received from the CAN bus line to the MCU 128, or transmit, to the CAN bus line, the CAN message frame indicating information on the battery pack 100 or battery management information under the control of the MCU 128.

The MCU 128 may detect the CAN message frame received from the external device 10 through the interface unit 126. In this case, the MCU 128 may determine whether there is the CAN message frame based on the number of bits of a bit signal received through the interface unit 126. That is, when the received bit signal is a frame according to the CAN communication protocol, the MCU 128 may determine that the frame is the CAN message frame.

A CAN frame for the CAN communication may have the same structure as shown in FIG. 5. As illustrated in FIG. 5, the CAN frame may include a start of frame (SOF) indicating a start of a frame, an arbitration identification (ID) field for inserting an arbitration ID for arbitrating a data priority, a remote transmission request (RTR) bit for requesting transmission of data of a specific ID, a control field for transmitting a control signal, a data field in which data having a predetermined data length are carried, a cyclic redundancy check (CRC) field including a CRC sequence and a CRC delimiter in order to detect an error, an acknowledgement (ACK) field including an ACK slot and an ACK delimiter in order to indicate accuracy of data reception, and an end of frame (EOF). The control field generally includes an identifier extension (IDE) indicating whether a length of the arbitration ID is a standard length (e.g., 11 bits) or an extension length (e.g., 29 bits) and a data length code (DLC) indicating a data length.

Accordingly, when the bit signal fed back has the structure illustrated in FIG. 5, the MCU 128 may determine the corresponding bit signal to be the CAN frame.

The MCU 128 may set the CAN baud rate based on whether an error is detected in the CAN message frame received from the external device 10 through the interface unit 126. In this case, the MCU 128 may set the CAN baud rate through the error detection of the CAN message frame, or set the CAN baud rate based on a pulse width of the CAN message frame. The baud rate set by the MCU 128 may be the same baud rate as the CAN baud rate of the external device 10.

Hereinafter, a detailed description of the method in which the MCU 128 sets the CAN baud rate to be the same as the baud rate of the external device 10 will be given.

First, the method in which the MCU 128 sets the CAN baud rate through the error detection in the CAN message frame will be described.

When the battery management apparatus 120 wakes up, the MCU 128 may initialize the CAN baud rate to the most recently used CAN baud rate, check whether an error is detected in the CAN message frame received from the external device 10 at the initialized CAN baud rate, set the initialized CAN baud rate as the final CAN baud rate when no error is detected, and change the initialized CAN baud rate to an unused CAN baud rate among the CAN baud rates set in the baud rate table when the error is detected.

Specifically, when a signal for operating the external device 10 is input or a signal for turning on the battery pack 100 is input, the battery management apparatus 120 may wake up.

For example, when the electric vehicle is connected and an engine is turned on, the battery management apparatus 120 may wake up. In addition, in the case of the battery pack 100 having an external switch 130, when the external switch 130 is turned on, the battery management apparatus 120 may wake up.

When the battery management apparatus 120 wakes up, the MCU 128 may initialize the CAN baud rate to the baud rate stored in the memory 122. Here, the baud rate stored in the memory 122 may mean the most recently used CAN baud rate.

When the CAN baud rate is initialized, the MCU 128 may diagnose whether an abnormality has occurred in the battery pack 100. In this case, the MCU 128 may diagnose whether an abnormality has occurred in the battery pack 100 based on the battery status data detected through the detection unit 124.

The MCU 128 may receive the battery status data indicating the state of the battery module 110 from the detection unit 124 and diagnose whether an abnormality has occurred in the battery pack 100 based on the battery status data. That is, the MCU 128 may receive state data (e.g., voltage, current, temperature, etc.) of the battery module 110 from the detection unit 124. Then, the MCU 128 may monitor and calculate the state (e.g., voltage, current, temperature, state of charge (SOC), state of health (SOH)) of the battery module 110 based on the state data received from the detection unit 124. In addition, based on the state monitoring results, the MCU 128 may perform a control function (e.g., temperature control, balancing control, charging/discharging control, etc.), a protection function (e.g., overdischarge, overcharge, overcurrent prevention, short circuit, fire extinguishing function, etc.), and/or the like.

The MCU 128 controls a battery to operate stably through diagnosis of the battery status, and when the diagnosis result determines that the battery can no longer operate, the MCU 128 controls the battery pack 100 to no longer operate, thereby preventing various problems that may occur due to the battery. That is, the MCU 128 may diagnose an abnormality that may occur in the battery pack 100 based on the battery status data.

The MCU 128 may control the switch 130 to turn on or off according to the diagnosis result of the battery pack 100. That is, when it is diagnosed that no abnormality has occurred in the battery pack 100, the MCU 128 may turn the switch 130 on. When it is diagnosed that an abnormality has occurred in the battery pack 100, the MCU 128 may turn the switch 130 off. For example, when the voltage, current, or temperature is greater than or equal to a threshold value or a sensor failure is diagnosed, the MCU 128 may not turn the switch 130 on so as to prevent the battery pack 100 from being used.

When the switch 130 is turned on, the MCU 128 may receive the CAN message frame from the external device 10 through the interface unit 126. That is, when the switch 130 is turned on, the external device 10 and the battery module 110 are connected, and the external device 10 may transmit the CAN message frame to the MCU 128 through the CAN bus line.

For example, when the switch 130 is turned on, when components (e.g., in the case of an electric vehicle, other components sharing a CAN bus such as an instrument panel and a motor controller), which constitute the external device 10 that receives power from the battery pack 100 and operate, receive power and wake up, and the components constituting the external device 10 wake up, the external device 10 may transmit the CAN message frame to the MCU 128 through the CAN bus line. In addition, in the case of a charger, the charger is in a wake-up state because it is receiving AC power, and thus, the charger may transmit the CAN message frame to the MCU 128 through the CAN bus line.

Meanwhile, depending on the type of the external device 10, the CAN message frame may not be transmitted to the battery management apparatus 120 during a preset initial baud rate setting time. In this case, the MCU 128 may transmit the CAN message frame to the external device 10.

For example, when the CAN message frame is not received from the external device 10 for the preset initial baud rate setting time, the MCU 128 may transmit the CAN message frame (e.g., CAN message frame for wake up) to the external device 10, and receive a response CAN message frame to the CAN message frame. For example, when the MCU 128 transmits the CAN message frame for the wake up to the external device 10, the external device 10 may transmit the response CAN message frame to the wake up.

When the CAN baud rate of the battery management apparatus 120 and the external device 10 are set to be the same, the MCU 128 receives a normal CAN message frame. When the CAN baud rates of the battery management apparatus 120 and the external device 10 are different, an error will be detected in the CAN message frame.

Accordingly, the MCU 128 may check whether an error is detected in the CAN message frame received from the external device 10. That is, the MCU 128 may detect errors by analyzing the CAN message frame.

For example, the MCU 128 may detect a bit error, a stuff error, a form error, a cyclic redundancy check (CRC) error, and an acknowledgment bit error. The bit error occurs when information transmitted from one node is not represented on the CAN bus. The stuff error occurs when six consecutive bit values appear in the CAN protocol even if the bit values cannot appear in principle. The form error occurs when a bit value specified as 0 or 1 appears differently. The CRC error occurs when it is confirmed that some bits have been changed through a CRC calculation for a CRC area of the received information. The acknowledgement bit error occurs when an acknowledgement bit having a bit value of 0 has a different value when the control unit receives the received information without an error.

When no error is detected in the CAN message frame, the MCU 128 may set the initialized CAN baud rate as a final baud rate and store the final baud rate in the memory 122. That is, when no error is detected in the CAN message frame, the MCU 128 may determine that the baud rate is the same as that of the external device 10, and set the initialized CAN baud rate as the final baud rate.

When an error is detected in the CAN message frame, the MCU 128 may count the number of detected errors using a counter (not illustrated), compare the number of errors with a preset threshold value, and change the initialized CAN baud rate to a different CAN baud rate. That is, when the number of errors detected in the CAN message frame is greater than or equal to the threshold value, the MCU 128 may determine that the baud rate is different from that of the external device 10, and automatically change the initialized CAN baud rate to a different CAN baud rate. Here, the threshold value is a randomly set number and may be set differently depending on the number of CAN message frames on the CAN bus line.

When the number of detected errors is greater than or equal to the threshold value, the MCU 128 may change the initialized CAN baud rate to a different CAN baud rate, and determine whether an error occurs in the CAN message frame received from the external device 10 using the changed CAN baud rate, determine the changed CAN baud rate as the final baud rate when no error is detected, and store the final baud rate in the memory 122. In this case, the MCU 128 may select a CAN baud rate different from the initialized CAN baud rate among the CAN baud rates in the baud rate table stored in the memory 122 and change the initialized CAN baud rate to the selected CAN baud rate.

For example, 100 kbps, 125 kbps, 250 kbps, 500 kbps, and 1 Mbps are set as CAN baud rates in the baud rate table, and when the initialized CAN baud rate is 125 kbps, the MCU 128 may change the baud rate to 250 kbps.

When the CAN baud rate is changed, the MCU 128 may receive the CAN message frame from the external device 10 at the changed CAN baud rate and check whether an error occurs in the received CAN message frame.

When no error is in the CAN message frame received from the external device 10 at the changed CAN baud rate, the MCU 128 may determine the changed CAN baud rate as the final baud rate.

When an error is detected in the CAN message frame received from the external device 10 at the changed CAN baud rate, the MCU 128 may compare the number of detected errors with the threshold value and change the changed baud rate back to a different CAN baud rate. In this case, the MCU 128 may select the unused CAN baud rate from the baud rate table and change the selected unused CAN baud rate.

For example, 100 kbps, 125 kbps, 250 kbps, 500 kbps, and 1 Mbps are set as the CAN baud rates in the baud rate table, and when the number of detected errors is greater than or equal to the threshold value as a result of changing the initialized CAN baud rate from 125 kbps to 250 kbps, the MCU 128 may change the baud rate to 250 kbps.

The MCU 128 may acquire the unused CAN baud rate from the baud rate table until no error is detected in the CAN message frame, and continue to change the baud rate to the acquired CAN baud rate.

In this way, the MCU 128 may select one of the CAN baud rates stored in the memory 122 and continue to change the selected CAN baud rate until no error is detected and a normal CAN message frame is received.

The MCU 128 may store the CAN baud rate at which communication succeeds in the memory 122 (NVM).

Changing the CAN baud rate when detecting the CAN error may only operate for a certain period of time after the battery management apparatus 120 wakes up to detect an actual CAN communication error.

The MCU 128 may transmit a test message at the changed CAN baud rate to the external device 10 through the CAN bus line to finally determine the baud rate when no error occurs. In this case, the MCU 128 may check whether an error occurs, and when no error occurs, finally determine the baud rate as the final baud rate, thereby enabling smooth communication between the battery management apparatus 120 and the external device 10. That is, the MCU 128 may change the CAN baud rate of the battery pack 100 to match the CAN baud rate of the external device 10, thereby enabling the smooth communication between the battery management apparatus 120 and the external device 10.

Next, a method of changing a baud rate using a pulse width of a CAN message frame will be described.

When a CAN reception pin (CAN RX pin) is set to an external interrupt mode, the MCU 128 may calculate interrupt occurrence time intervals whenever an interrupt occurs, calculate the baud rate based on the interrupt occurrence time intervals for a preset certain period of time, acquire the baud rate most similar to (e.g., closest to) the calculated baud rate from a baud rate table and initialize the baud rate to the CAN baud rate, and check whether an error is detected in the CAN message frame received from the external device 10 at the initialized CAN baud rate and set the initialized CAN baud rate as a final CAN baud rate when no error is detected.

Specifically, when connected to the external device 10, the MCU 128 may diagnose whether an abnormality has occurred in the battery pack 100. In this case, the MCU 128 may diagnose whether an abnormality has occurred in the battery pack 100 based on the battery status data detected through the detection unit 124.

The MCU 128 may control the switch 130 to turn on or off according to the diagnosis result of the battery pack 100. That is, when it is diagnosed that an abnormality has occurred in the battery pack 100, the MCU 128 may turn the switch 130 off. When it is diagnosed that no abnormality has occurred in the battery pack 100, the MCU 128 may turn the switch 130 on.

When the switch 130 is turned on, the MCU 128 may receive the CAN message frame from the external device 10 through the interface unit 126. That is, when the switch 130 is turned on, the external device 10 and the battery module 110 are connected, and the external device 10 may transmit the CAN message frame to the MCU 128 through the CAN bus line.

In this case, when the CAN message frame is not received from the external device 10 for the preset initial baud rate setting time, the MCU 128 may transmit the CAN message frame (e.g., CAN message frame for wake up) to the external device 10, and receive a response CAN message frame to the CAN message frame. For example, when the MCU 128 transmits the CAN message frame for the wake up to the external device 10, the external device 10 may transmit the response CAN message frame to the wake up.

When the CAN message frame is received from the external device 10, the MCU 128 may calculate the time interval at which the interrupt occurs whenever the interrupt occurs. In this case, the interrupt may be set to occur on both a rising edge and a falling edge.

Accordingly, the MCU 128 may use a timer to calculate the time interval at which the interrupt occurs whenever the interrupt occurs at the rising edge or falling edge. In this case, the CAN RX Pin of the MCU 128 may be set to the external interrupt mode. The CAN RX Pin of the MCU 128 may be used in the CAN communication mode, the external interrupt mode, etc., but these modes may not be used simultaneously. Accordingly, the CAN RX Pin of the MCU 128 is set to the external interrupt mode, the time may be calculated each time the interrupt occurs, and when the CAN baud rate is determined, the CAN RX Pin may be changed to the CAN communication mode.

When the interrupt occurrence time intervals are calculated, the MCU 128 may select a minimum time tₘᵢₙ among the interrupt occurrence time intervals as 1 bit time for a preset certain period of time, and calculate the baud rate using the selected minimum time. In this case, the MCU 128 may calculate a baud rate by calculating a reciprocal of the selected minimum time. In other words, the MCU 128 may calculate '1/ tₘᵢₙ' as the baud rate.

For example, when the interrupt occurs as illustrated in FIG. 6A, 1µs is the minimum time, and thus the MCU 128 may calculate the baud rate as 1 Mbps (1/1 µs = 1 Mbps).

When the interrupt occurs as illustrated in FIG. 6B, 2µs is the minimum time, so the MCU 128 may calculate 500 Mbps (1/2 µs = 500 kbps) as the baud rate.

When the baud rate is calculated, the MCU 128 may initialize the baud rate most similar to (e.g., closest to) the baud rate calculated from the baud rate table stored in the memory 122 as the CAN baud rate.

The calculated baud rate may not be the exact baud rate due to measurement error of the timer, etc., and the generally used CAN baud rates such as 100 kbps, 125 kbps, 250 kbps, 500 kbps, and 1 Mbps are pre-stored in the memory 122. Accordingly, the MCU 128 may select the baud rate most similar to the calculated baud rate among the CAN baud rates set in the baud rate table stored in the memory 122 as the CAN baud rate.

Meanwhile, when the CAN baud rate of the battery management apparatus 120 and the external device 10 are set to be the same, the MCU 128 receives a normal CAN message frame. When the CAN baud rates of the battery management apparatus 120 and the external device 10 are different, an error will be detected in the CAN message frame.

Accordingly, when the CAN baud rate is initialized, the MCU 128 may receive the CAN message frame from the external device 10 at the initialized CAN baud rate, check whether an error occurs in the received CAN message frame, and determine the initialized baud rate as the final baud rate when no error occurs.

Specifically, the MCU 128 may check whether an error occurs in the CAN message frame received from the external device 10. That is, the MCU 128 may detect errors by analyzing the CAN message frame.

For example, the MCU 128 may detect the bit error, the stuff error, the form error, the cyclic redundancy check (CRC) error, and the acknowledgment bit error.

When no error is detected in the CAN message frame received from the external device 10, the MCU 128 may finally determine the initialized CAN baud rate as the final baud rate.

When an error is detected in the CAN message frame received from the external device 10, the MCU 128 may recalculate the interrupt occurrence time intervals whenever the interrupt occurs, recalculate the minimum time tₘᵢₙ among the interrupt occurrence time intervals for a preset certain period of time, select again as 1 bit time, recalculate the baud rate using the selected minimum time, and reselect a baud rate most similar to the baud rate calculated from the baud rate table stored in the memory 122 and initialize the selected baud rate to the CAN baud rate.

In this way, the MCU 128 may continue to change the baud rate until no error is detected and a normal CAN message frame is received.

The MCU 128 may store the baud rate at which communication succeeds in the memory 122 (NVM).

Here, the MCU 128 may be implemented as a processor, a central processing unit (CPU) or a system on chip (SoC), and may operate an operating system or applications to control a plurality of hardware or software components connected to the MCU 128, thereby performing various data processing and operations. The MCU 128 may be configured to execute at least one command stored in the memory 122 and store the execution result data in the memory 122.

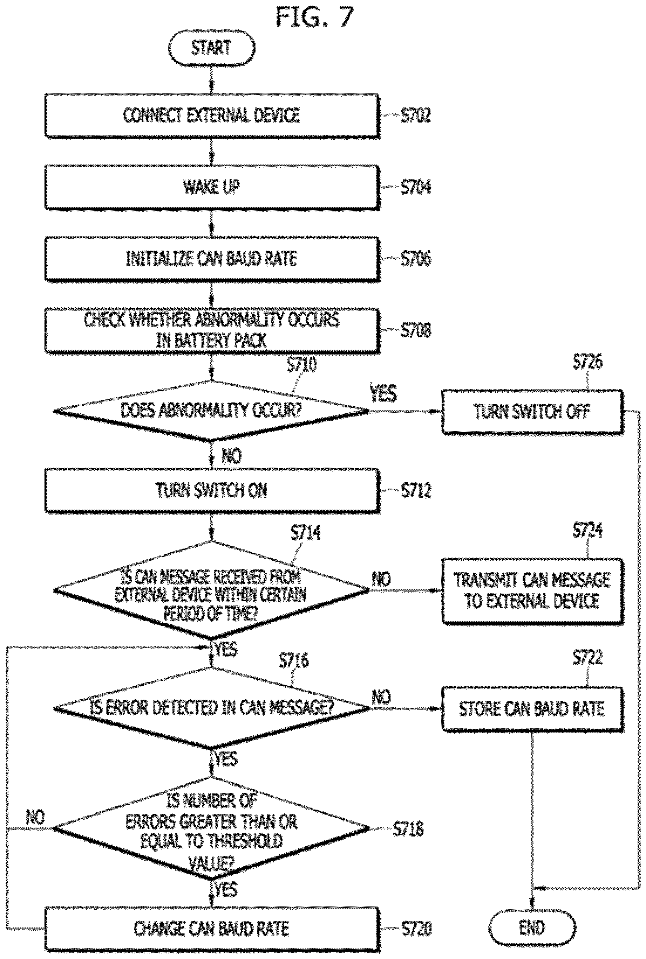

FIG. 7 is a flow diagram illustrating a method of setting a CAN baud rate according to an embodiment of the present invention.

Referring to FIG. 7, when the external device 10 is connected (S702) and the battery management apparatus 120 wakes up (S704), the MCU 128 initializes the CAN baud rate to the baud rate stored in the memory 122 (S706). When a signal for operating the external device 10 is input or a signal for turning on the battery pack 100 is input, the battery management apparatus 120 may wake up. Here, the baud rate stored in the memory 122 may mean the most recently used CAN baud rate.

When operation S706 is performed, the MCU 128 diagnoses whether an abnormality occurs in the battery pack 100 (S708). In this case, the MCU 128 may diagnose whether an abnormality has occurred in the battery pack 100 based on the battery status data detected through the detection unit 124.

As a result of the diagnosis in operation S708, when no abnormality occurs in the battery pack 100 (S710), the MCU 128 turns the switch 130 on (S712) and determines whether the CAN message frame is received from the external device 10 within a preset certain period of time (S714).

As a result of the determination in operation S714, when the CAN message frame is received from the external device 10 within a certain period of time, the MCU 128 checks whether an error is detected in the CAN message frame received from the external device 10 (S716).

As a result of the inspection in operation S716, when an error is detected in the CAN message frame, the MCU 128 counts the number of detected errors using a counter to determine whether the number of errors is greater than or equal to the threshold value (S718).

As a result of the determination in operation S718, when the number of errors is greater than or equal to the threshold value, the MCU 128 changes the initialized CAN baud rate to a different CAN baud rate (S720) and performs operation S716.

As a result of the determination in operation S718, when the number of errors is not greater than or equal to the threshold value, the MCU 128 performs operation S716 again.

As a result of the check in operation S716, when no error is detected in the CAN message frame, the MCU 128 stores the initialized CAN baud rate as the final CAN baud rate (S722).

As a result of the determination in operation S714, when the CAN message frame is not received from the external device 10 within a certain period of time, the MCU 128 transmits the CAN message frame to the external device 10 (S724) and performs operation S714.

As a result of the diagnosis in operation S708, when an abnormality occurs in the battery pack 100, the MCU 128 turns the switch 130 off (S726).

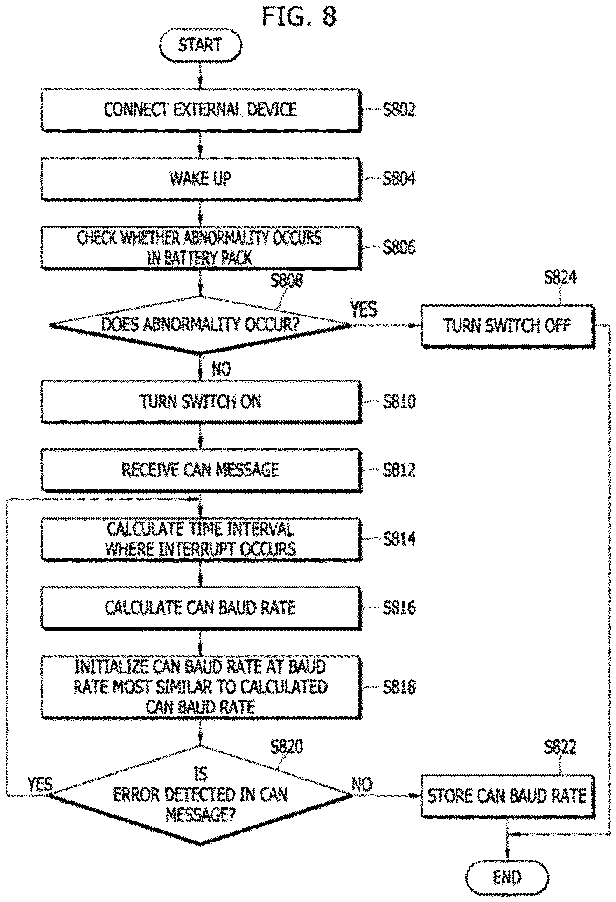

FIG. 8 is a flow diagram illustrating a method of setting a CAN baud rate according to another embodiment of the present invention.

Referring to FIG. 8, when the external device 10 is connected (S802) and the battery management apparatus 120 wakes up (S804), the MCU 128 diagnoses whether an abnormality occurs in the battery pack 100 (S806). In this case, the MCU 128 may diagnose whether an abnormality has occurred in the battery pack 100 based on the battery status data detected through the detection unit 124.

As a result of the diagnosis in operation S806, when no abnormality occurs in the battery pack 100 (S808), the MCU 128 turns the switch 130 on (S810) and receives the CAN message frame (S812).

When operation S812 is performed, the MCU 128 calculates the time interval at which each time the interrupt occurs (S814). In this case, the interrupt may be set to occur on both the rising edge and falling edge. Accordingly, the MCU 128 may use a timer to calculate the time interval at which the interrupt occurs whenever the interrupt occurs at the rising edge or falling edge. In this case, the CAN RX Pin of the MCU 128 may be set to the external interrupt mode.

When operation S814 is performed, the MCU 128 calculates the CAN baud rate based on the interrupt occurrence time intervals for a preset certain period of time (S816). In this case, the MCU 128 may select the minimum time tₘᵢₙ among the interrupt occurrence time intervals as 1 bit time and calculate the baud rate using the selected minimum time. The MCU 128 may calculate a baud rate by calculating the reciprocal of the selected minimum time. In other words, the MCU 128 may calculate '1/minimum time' as the baud rate.

When operation S816 is performed, the MCU 128 may initialize the baud rate most similar to the baud rate calculated from the baud rate table stored in the memory 122 as the CAN baud rate (S818).

When operation S818 is performed, the MCU 128 receives the CAN message frame from the external device 10 at the initialized CAN baud rate and checks whether an error is detected in the received CAN message frame (S820).

As a result of the check in operation S820, when an error is detected in the CAN message frame, the MCU 128 performs operation S814 again.

As a result of the check in operation S820, when no error is detected in the CAN message frame, the MCU 128 stores the initialized CAN baud rate as the final CAN baud rate (S822).

As a result of the diagnosis in operation S808, when an abnormality occurs in the battery pack 100, the MCU 128 turns the switch 130 off (S824).

As described above, according to the present invention, when one type of battery pack is used in multiple models of external devices (e.g., LEV, x electrical vehicle xEV, or ESS), the battery management apparatus 120 automatically detects the baud rate of the external device and automatically sets the baud rate to be appropriate for the external device, so there is no need to provide a separate device for setting the baud rate, and operator errors can be prevented.

The terms "unit" used in the present specification may include units configured by hardware, software, or firmware, and may be used compatibly with terms such as, for example, logics, logic blocks, components, circuits, or the like. The "unit" may be an integrally configured component or may be a smallest unit or part of the component that performs one or more functions. For example, according to one embodiment, the "unit" may be implemented in the form of an application-specific integrated circuit (ASIC).

Implementations described in the present specification may be implemented in, for example, a method or process, an apparatus, a software program, a data stream, or a signal. Although discussed only in the context of a single form of implementation (e.g., discussed only as a method), implementations of the discussed features may also be implemented in other forms (e.g., an apparatus or a program). The apparatus may be implemented in suitable hardware, software, and firmware, and the like. A method may be implemented in an apparatus such as a processor, which generally refers to a computer, a microprocessor, an integrated circuit, a processing device including a programmable logic device, or the like. The processor also includes communication devices such as a computer, a cell phone, portable/personal digital assistants ("PDA"), and other devices that facilitate communication of information between end-users.

According to the present invention, when one type of battery pack is used in multiple models of external devices (e.g., LEV, x electrical vehicle xEV, or ESS), since the battery management apparatus automatically detects the baud rate of the external device and automatically sets the baud rate to be appropriate for the external device, there is no need to provide a separate device for setting the baud rate, and operator errors can be prevented.

However, the effects that can be achieved through the present invention are not limited to the above-described effects, and other technical effects not described can be clearly understood by those skilled in the art from the description of the invention described below.

Although the present invention has been described with reference to embodiments shown in the accompanying drawings, it is only an example. It will be understood by those skilled in the art that various modifications and other equivalent exemplary embodiments are possible from the present invention. Accordingly, a true technical scope of the present invention is to be determined by the appended claims.

## Claims

1. A battery management apparatus, BMS, (120) comprising:
an interface unit (126) configured to perform controller area network, CAN, communication with an external device (10) through a CAN bus line; and
a micro controller unit, MCU, (128) configured to set a CAN baud rate based on whether an error is detected in a CAN message frame received from the external device (10) through the interface unit (126).

2. The battery management apparatus (120) of claim 1, wherein, when the battery management apparatus (120) wakes up, the MCU (128) is configured to initialize the CAN baud rate to a most recently used CAN baud rate, to check whether an error in the CAN message frame received from the external device (10) is detected at the initialized CAN baud rate and to set the initialized CAN baud rate as a final CAN baud rate when no error is detected.

3. The battery management apparatus (120) of claim 2, wherein, when an error is detected in the CAN message frame, the MCU (128) is configured to count the number of detected errors, and when the counted number of errors is greater than or equal to a preset threshold value, the MCU (128) is configured to change the initialized CAN baud rate to a different CAN baud rate, to check whether the error is detected in the CAN message frame received from the external device (10) 10 at the changed CAN baud rate and to set the changed CAN baud rate as the final CAN baud rate when no error is detected.

4. The battery management apparatus (120) of claim 1, wherein, when a CAN reception pin (CAN RX pin) is set to an external interrupt mode, the MCU (128) is configured to calculate interrupt occurrence time intervals whenever an interrupt occurs, to calculate the baud rate based on the interrupt occurrence time intervals for a preset certain period of time, to acquire the baud rate most similar to the calculated baud rate from a baud rate table, to initialize the baud rate to the CAN baud rate, to check whether an error is detected in the CAN message frame received from the external device (10) at the initialized CAN baud rate and to set the initialized CAN baud rate as a final CAN baud rate when no error is detected.

5. The battery management apparatus (120) of claim 4, wherein the MCU (128) is configured to select a minimum time among the interrupt occurrence time intervals for a certain period of time as 1 bit time and to calculate the baud rate using a reciprocal of the selected minimum time.

6. The battery management apparatus (120) of one of the preceding claims, further comprising:
a detection unit (124) configured to detect battery status data including at least one of a voltage, a current, and a temperature of a battery module (110) and transmit the detected battery status data to the MCU (128),
wherein the MCU (128) is configured to diagnose whether an abnormality occurs in a battery pack (100) based on the battery status data, and to turn a switch (130) on when no abnormality occurs in the battery pack (100) to receive the CAN message frame from the external device (10) through the CAN bus line.

7. The battery management apparatus (120) of one of the preceding claims, wherein, when no error is detected in the CAN message frame, the MCU (128) is configured to determine that the CAN baud rate is the same as that of the external device (10), and
when an error is detected in the CAN message frame, the MCU (128) is configured to change the preset CAN baud rate to a different CAN baud rate.

8. A method of setting a controller area network, CAN, baud rate, comprising:
receiving a CAN message frame from an external device (10) through a CAN bus line,
setting, by a micro controller unit, MCU, (128) of a battery management apparatus (120), a CAN baud rate based on whether an error is detected in the CAN message frame.

9. The method of claim 8, further comprising:
when the battery management apparatus (120) wakes up, initializing, by the MCU (128), a CAN baud rate to a most recently used CAN baud rate;
diagnosing, by the MCU (128), whether an abnormality occurs in a battery pack (100) based on battery status data;
pwhen no abnormality occurs in the battery pack (100), turning, by the MCU (128), a switch (130) on to receive a CAN message frame from the external device (10) through a CAN bus line; and
checking, by the MCU (128), whether an error is detected in the CAN message frame and setting the initialized CAN baud rate as a final CAN baud rate when no error is detected.

10. The method of claim 9, wherein, when an error is detected in the CAN message frame, the MCU (128) counts the number of detected errors, and when the counted number of errors is greater than or equal to a preset threshold value, the MCU (128) changes the initialized CAN baud rate to a different CAN baud rate, and checks whether an error is detected in the CAN message frame received from the external device (10) at the changed CAN baud rate and sets the changed CAN baud rate as the final CAN baud rate when no error is detected.

11. The method of claim 10, wherein, the MCU (128) acquires a CAN baud rate different from the initialized CAN baud rate from a baud rate table in which a plurality of different CAN baud rates are set, and changes the initialized CAN baud rate to the acquired different CAN baud rate.

12. The method of claim 8, further comprising:
diagnosing, by the MCU (128), whether an abnormality occurs in a battery pack (100) based on battery status data;
when no abnormality occurs in the battery pack (100), turning, by the MCU (128), a switch (130) on to receive a CAN message frame from the external device (10) through a CAN bus line;
calculating, by the MCU (128), interrupt occurrence time intervals whenever an interrupt occurs according to reception of the CAN message frame;
calculating, by the MCU (128), a baud rate based on the interrupt occurrence time intervals for a preset certain period of time;
acquiring, by the MCU (128), a baud rate most similar to the calculated baud rate from a baud rate table and initializing the acquired baud rate to a CAN baud rate; and
checking, by the MCU (128), whether the error is detected in the CAN message frame received from the external device (10) at the initialized CAN baud rate and setting the initialized CAN baud rate as a final CAN baud rate when no error is detected.

13. The method of claim 12, wherein, in the calculating of the interrupt occurrence time intervals, the MCU (128) sets a CAN reception pin (CAN RX pin) to an external interrupt mode and calculates the interrupt occurrence time intervals.

14. The method of claim 12 or 13, wherein, in the calculating of the baud rate based on the interrupt occurrence time intervals, the MCU (128) selects a minimum time among the interrupt occurrence time intervals for the certain period of time as 1 bit time, and uses a reciprocal of the selected minimum time to calculate the baud rate.

15. The method of one of claims 12 to 14, wherein, in the setting of the initialized CAN baud rate as the final CAN baud rate, when an error is detected in the CAN message frame, the MCU (128) selects a minimum time among the interrupt occurrence time intervals for the preset certain period of time as 1 bit time, calculates the baud rate using the selected minimum time, and acquires a baud rate most similar to the calculated baud rate from the baud rate table to change the CAN baud rate.
